# EUROPEAN PATENT APPLICATION

(11) **EP 3 367 332 A1**
(43) Date of publication of application: **29.08.2018**
(21) Application number: 18000177.8
(22) Date of filing: 21.02.2018
(51) Int. Cl.: G06T 7/12, G06T 7/13

(54) **INFORMATION PROCESSING DEVICE, INFORMATION PROCESSING METHOD, AND ARTICLE MANUFACTURING METHOD**

(30) Priority: 24.02.2017 JP 2017032867
(71) Applicant: CANON KABUSHIKI KAISHA, Tokyo (JP)
(72) Inventor: Yoshii, Hiroto, Tokyo (JP)
(74) Representative: WESER & Kollegen

(57) **Abstract**

An information processing device performs a contour extraction of ah object based on an image information which is obtained by imaging the object and in which each pixel has information regarding a distance from a reference position and includes a processor configured to perform a contour extraction process on the image information. The processor performs the contour extraction process on one pixel of the image information based on a difference equal to or greater than a threshold among differences between the distance corresponding to the one pixel and the distances corresponding to a plurality of peripheral pixels in periphery of the one pixel.

## Description

### BACKGROUND OF THE INVENTION

### Field of the Invention

The present invention relates to an information processing device, a system, an information processing method, and an article manufacturing method.

### Description of the Related Art

There are measurement devices (information processing devices) that recognize objects in a contactless manner using captured images of the objects to which uniform light is projected (hereinafter referred to as grayscale images) and images having distance information (hereinafter referred to as distance images) obtained from captured images of the objects to which pattern light is projected. The recognition of the objects includes recognition of disposition (for example, at least one of a position and an attitude) of the objects. Such measurement devices can recognize objects using the contours of the objects extracted from grayscale images. Precision of the contour extraction depends on contrast of a grayscale image and an imaging direction of an object. Japanese Unexamined Patent Publication No. 2016-038654 discloses an image processing device that extracts contour from an image with low contrast.

However, when the image processing device disclosed in Japanese Unexamined Patent Publication No. 2016-038654 is applied to a distance image, for example, in a case in which measurement targets are mutually overlapping thin flat plates, the image processing device may not easily extract contour with high precision due to an influence of noise or the like when a step difference (a distance change) is small in the contour.

### SUMMARY OF THE INVENTION

The present invention provides a technology advantageous for extracting the contour of an image, for example.

According to an aspect of the present invention, there is provided an information processing device that recognizes an object based on a distance image which is obtained by imaging the object and in which each pixel has information regarding a distance from a reference position and includes a processor configured to perform a contour extraction process on the distance image. The processor performs the contour extraction process on one pixel of the distance image based on a difference equal to or greater than a threshold among differences between the distance corresponding to the one pixel and the distances corresponding to a plurality of peripheral pixels in periphery of the one pixel

### BRIEF DESCRIPTION OF THE DRAWINGS

Fig. 1 is a schematic diagram illustrating a configuration of a measurement device including an information processing device according to a first embodiment.
Fig. 2 is a flowchart illustrating a process of detecting the contour of an object.
Fig. 3 is a schematic diagram illustrating a captured image from which a contour is detected.
Fig. 4 is a diagram illustrating a relation between a reference coordinate system in which predetermined coordinates on an optical axis of an imaging unit are set as reference coordinates and a normal direction of a main plane of an object.
Fig. 5 is a flowchart illustrating a contour extraction process according to a second embodiment.
Fig. 6 is a flowchart illustrating a contour extraction process according to a third embodiment.
Fig. 7 is a diagram illustrating an example of a user interface setting an allowable range of a candidate for a normal direction.
Fig. 8 is a flowchart illustrating a contour extraction process according to a fourth embodiment.
Fig. 9 is a diagram illustrating a setting example of candidates for a slope angle.
Fig. 10 is a diagram illustrating another setting example of the candidates for the slope angle.
Fig. 11 is a block diagram illustrating a configuration of an information processing device to which the first to fourth embodiments can be applied.
Fig. 12 is a diagram illustrating a control system including a gripping device furnished with a measurement device.

### DESCRIPTION OF THE EMBODIMENTS

Hereinafter, modes for carrying out the present invention will be described with reference to the drawings and the like.

### (First Embodiment)

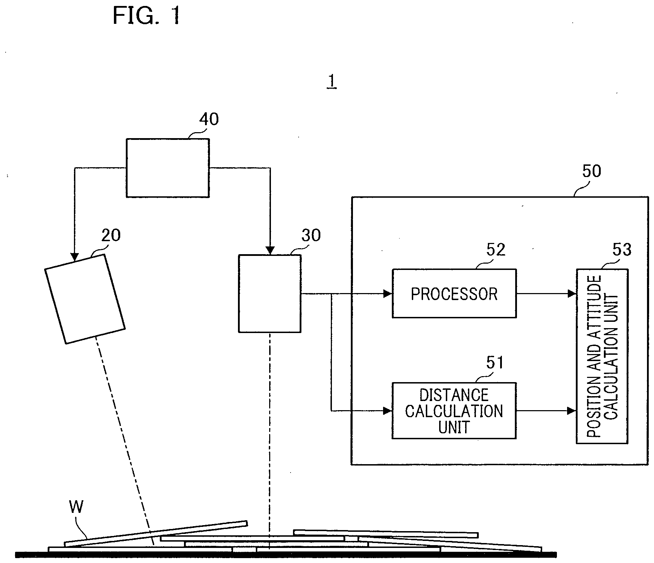

Fig. 1 is a schematic diagram illustrating a configuration of a measurement device 1 including an information processing device according to a first embodiment. The measurement device 1 measures the shape of an object W and recognizes the object W (recognizes disposition (for example, at least one of a position and an attitude) of the object) based on a measurement result. In the embodiment, the object W is assumed to be a thin flat plate and the measurement device 1 performs measurement in a state in which the plurality of objects W overlap each other.

The measurement device 1 includes a measurement head including a projection unit 20 and an imaging unit 30, a control unit 40, and an information processing device 50. The projection unit 20 projects light to the object W. The light projected by the projection unit 20 includes stripe pattern light for obtaining a distance image and uniform light for obtaining a grayscale image. Instead of the stripe pattern light, slit light may be used. The distance information is calculated for each pixel of the captured image. The imaging unit 30 images the object W to which the light is projected. The control unit 40 controls operations of the projection unit 20 and the imaging unit 30. The information processing device 50 includes, for example, a CPU and a memory and obtains a position and an attitude of the object W from a captured image acquired by the imaging unit 30. Here, the distance image is an image information or an image data including a plurality of pixel information in which each pixel has distance data.

The information processing device 50 includes a distance calculation unit 51, a processor 52, and a position and attitude calculation unit 53. The distance calculation unit 51 calculates distance information indicating a distance from a predetermined position on an optical axis of the imaging unit 30 (hereinafter referred to as a reference position) to the object W from a captured image of the object W to which the stripe pattern light is projected, with the captured image acquired by the imaging unit 30. The processor 52 performs a contour extraction process of extracting (detecting) the contour of the object W based on the distance information calculated by the distance calculation unit 51. The processor 52 detects the contour of the object W from the captured image of the object W to which the uniform light is projected, with the captured image acquired by the imaging unit 30. The position and attitude calculation unit 53 obtains a disposition (for example, a position and an attitude) of the object W using the distance information calculated by the distance calculation unit 51, contour information detected by the processor 52, and a 3D-CAD model of the object W.

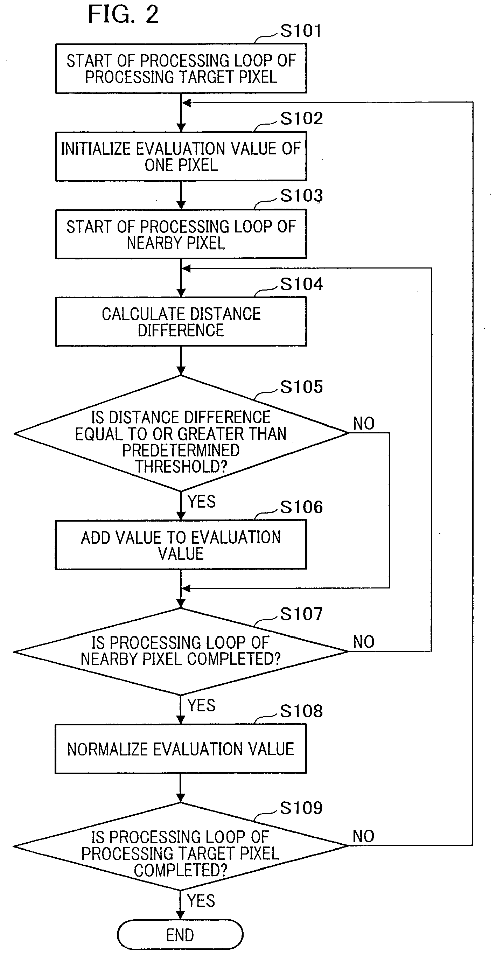

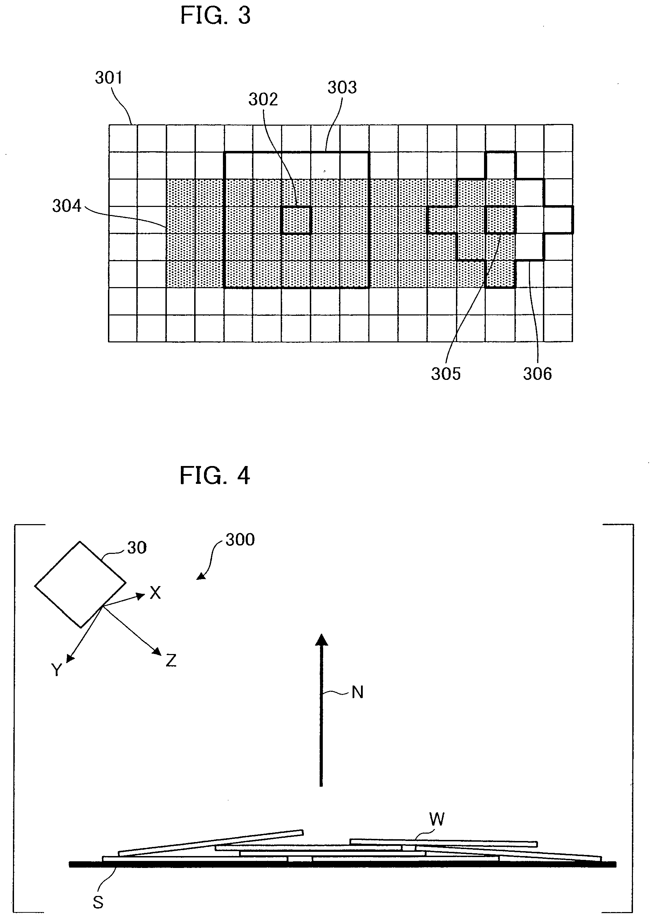

Fig. 2 is a flowchart illustrating a process of detecting the contour of the object W by the processor 52. Fig. 3 is a schematic diagram illustrating a captured image from which the contour is extracted by the processor 52. A captured image 301 in FIG. 3 is formed by 128 pixels of 8x16. The processor 52 processes distance information of each pixel and determines an evaluation value of each pixel to be used to extract the contour.

S101 is a starting point of a pixel processing loop. S109 is a step of determining whether the pixel processing loop is completed. The processor 52 repeats processes on each processing target pixel from S102 to S109.

In S102, the processor 52 initializes the evaluation value of one pixel among the processing target pixels. S103 is a starting point of the processing loop in which a difference between the distance information of one pixel and the distance information of a nearby pixel (hereinafter also referred to as a peripheral pixel) included in a predetermined range centering on the one pixel is calculated. S107 is a step of determining whether the difference calculation processing loop is completed.

The number of times the processes from S102 to S109 are repeated and the number of times the processes from S104 to S107 are repeated will be described with reference to FIG. 3. In FIG. 3, a pixel of which the evaluation value is initialized in S102 is set as a first pixel 302. The first pixel 302 is a pixel that is first processed among processing target pixels 304 which are targets on which the processes from S102 to S109 are repeated. A predetermined range centering the first pixel 302 is set as a range 303. The range 303 is a square range of 5×5 centering the first pixel 302. S104 to S107 are repeated on the first pixel 302 and each pixel included in the range 303.

In the embodiment, the processing target pixels 304 are decided so that the pixel range of 5x5 centering on any one pixel among the processing target pixels 304 at the time of processing the one pixel does not exceed the captured image 301 . That is, in the embodiment, the number of pixels included in the processing target pixels 304 is 48 pixels of 4×12.

As described above, the number of times the processes from S102 to S109 are repeated is 48 times of 4x12 and the number of times the processes from S104 to S107 are repeated is 25 times of 5×5. The processing target pixels 304 may be all the pixels of the captured image 301.

A predetermined range that defines nearby pixels is not limited to a square such as the range 303. For example, a processing pixel may be set as a pixel 305 and a predetermined range in which nearby pixels of the pixel 305 are defined may be a range that has a shape like a range 306. Further, all the pixels centering on a processing pixel within a given distance may be set. The distance mentioned herein may be a physical distance or may be an inter-pixel distance in a captured image.

In S104, the processor 52 calculates a difference between distance information of the first pixel 302 and distance information of one pixel included in the range 303, that is, a distance difference (subtraction of distance). The subtraction is not limited thereto. For example, another evaluation value that has correlation with the subtraction may be used. For example, a difference between a distance corresponding to the first pixel 302 and distances corresponding to pixels in the periphery of the first pixel 302 or an evaluation value (for example, a ratio) indicating the degree of difference can be used. In S105, the processor 52 determines whether the calculated subtraction is equal to or greater than a predetermined threshold. When it is determined that the calculated difference is equal to or greater than the predetermined threshold (Yes), the value is added to the evaluation value corresponding to the first pixel 302 in S106.

As the added value, there are the number of pixels having a larger subtraction than the predetermined threshold, a subtraction amount exceeding the predetermined threshold of the pixel having a larger subtraction than the predetermined threshold, and a total sum of subtraction amounts exceeding the predetermined threshold of the pixel having a larger subtraction than the predetermined threshold. When it is determined in S105 that the calculated difference is less than the predetermined threshold after S106 (No), S104 is performed on another pixel included in the range 303. When the process is completed for all the pixels included in the range 303, the process proceeds to S108 (S107).

In S108, the processor 52 normalizes the evaluation value as necessary. For the processing target pixel, it is not necessary to normalize the evaluation value when the number of nearby pixels is the same. For the processing target pixel, when the number of nearby pixels is different, for example, the evaluation value is normalized by dividing the evaluation value obtained by S107 by the number of nearby pixels. In the range of the nearby pixels, the normalization may be performed so that a weight of the subtraction from the nearby pixel close to the processing target pixel is large and a weight of the subtraction from the nearby pixel distant from the processing target pixel is small.

After S108, evaluation values of pixels different from the first pixel 302 are calculated. When the calculation of the evaluation values of all the processing target pixels 304 is completed, the evaluation values corresponding to the processing target pixels 304, such as the evaluation value of the first pixel and the evaluation values of the other pixels different form the first pixel, can be obtained. When the number of pixels is used as the evaluation value, one of numbers 0 to 24 serves as an evaluation value corresponding to the processing target pixel 304. The processor 52 detects the contour of the object W based on the evaluation values.

At a position at which there is contour, the subtraction, that is, the distance difference, increases. Therefore, the position of the pixel at which the evaluation value increases is the position of the contour. The distance difference is a step difference. By adjusting the predetermined threshold in S105, it is possible to decide the size of a detectable step difference. As the predetermined value decreases, a more minute step difference can be detected.

As described above, according to the detection method according to the embodiment, it is possible to provide a detection method advantageous in the contour extraction on the captured image of the overlapping thin flat plates having a small step difference. In a contour detection method of the related art, luminance is used as a reference. In the embodiment, however, the distance information is used as the reference. Therefore, it is possible to explicitly evaluate the step difference suitable for a physical distance.

### (Second Embodiment)

In the first embodiment, the optical axis of the imaging unit 30 is assumed to be parallel to the normal direction of the main plane of the object W. However, in general, the optical axis of the imaging unit 30 may not be parallel to the normal direction of the main plane of the object W. Fig. 4 is a diagram illustrating a relation between a reference coordinate system in which predetermined coordinates (a predetermined position) on an optical axis of an imaging unit 30 are set as reference coordinates (a reference position) and a normal direction of a main plane of the object W. The objects W are thin flat plates and are scattered to overlap on a placement surface S. The normal direction of the main plane of the objects W is assumed to be the representative normal vector N. A representative normal vector N may be a normal direction of the placement surface S or may be a normal direction obtained based on a plane estimation result of all the plurality of flat plates.

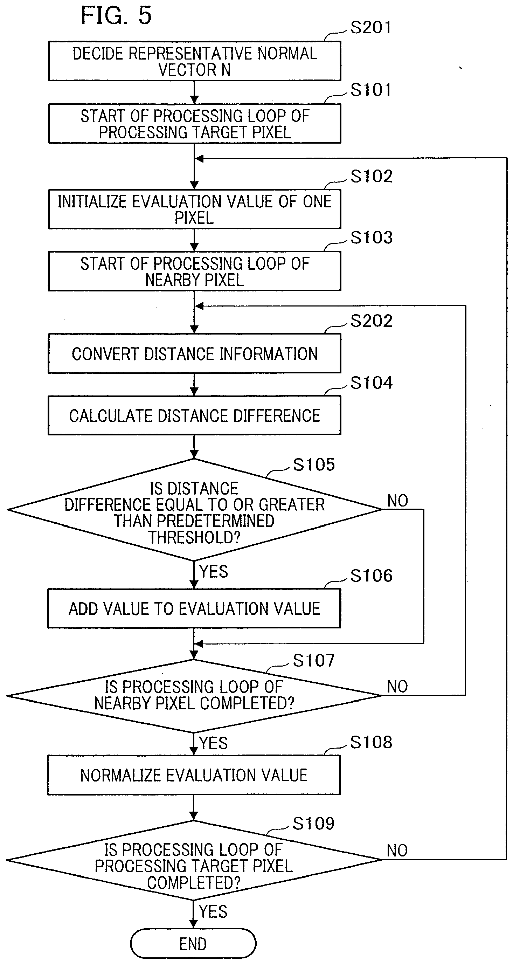

The Z axis of a reference coordinate system 300 of the imaging unit 30 is not parallel to the representative normal vector N. Through the contour extraction process according to the embodiment, it is possible to detect the contour of the object W even in this case. Fig. 5 is a flowchart illustrating the contour extraction process according to the embodiment. In the embodiment, a distance image based on the reference coordinate system is converted into a second distance image of which each pixel has information regarding a distance from the reference position on the representative normal vector N, and the contour extraction process is performed on the second distance image. The same reference numerals are given to common processes to those of the first embodiment and the description thereof will be omitted.

In the embodiment, before S101, the processor 52 decides the representative normal vector N in S201. The representative normal vector N is expressed as (a, b, c) based on the reference coordinate system 300. Between S103 and S104, the processor 52 converts the distance information of nearby pixels in which the reference coordinate system 300 is used as a reference into distance information in which the representative normal vector N is used as a reference (S202).

Specifically, the position of the first pixel 302 at which the reference coordinate system 300 is used as the reference is moved to the origin (0, 0, 0) . Subsequently, when (x, y, z) are relative coordinates of a nearby pixel when viewed from the first pixel 302, the coordinates are converted into (x, y, ax+by+cz). As a result, a distance value of the first pixel is 0 and a distance value of the nearby pixel is ax+by+cz. A subtraction is |ax+by+cz|.

The physical meaning of this calculation is that a plane on which the representative normal vector N passing through the first pixel 302 is assumed and a distance from the plane to each point of the nearby pixel is calculated. To detect the contour, a subtraction in a depth direction (the z direction) is important. In this calculation, the plane may be moved in parallel in any way.

In the method of deciding the representative normal vector N in S201, for example, the representative normal vector N may be obtained by fitting the plane using the distance information of all the pixels of the distance image in advance. The representative normal vector N may also be decided by allowing a user to explicitly designate a direction of the placement surface S in advance. The representative normal vector N may also be decided in advance based on a position and an attitude of a container or a box in which the objects W are provided.

According to the detection method according to the embodiment, since the evaluation value of only a portion in which there is actually a step difference increases, it is possible to suppress an influence of a disposition situation of the objects W on detection precision of the contour.

### (Third Embodiment)

In the second embodiment, one representative normal vector N is decided and the distance information is converted into the distance information in which the representative normal vector N is used as the reference. However, when the predetermined threshold in S105 is considerably small, that is, when the contour of the thin flat plate is detected, erroneous detection of the contour can occur in some cases in the second embodiment. This is because deviation between one representative normal vector N and the normal direction of the object W is large.

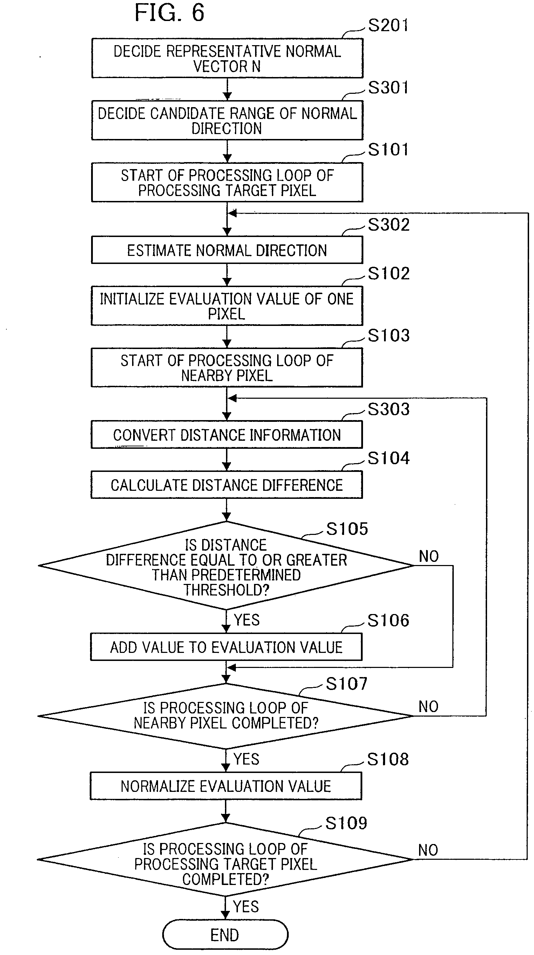

Through the contour extraction process according to a third embodiment, it is possible to detect the contour of the object W even in this case. Fig. 6 is a flowchart illustrating the contour extraction process according to the embodiment. The same reference numerals are given to common processes to those of the first or second embodiment and the description thereof will be omitted.

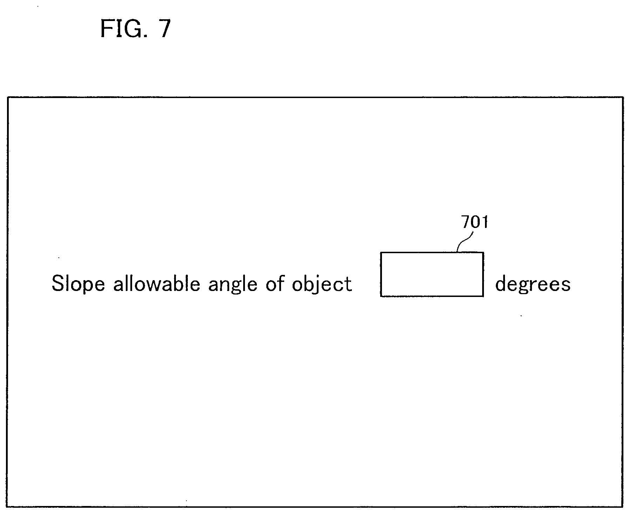

In the embodiment, in S301 between S201 and S101, the processor 52 sets an allowable range for the direction of a normal line of the object W. Fig. 7 is a diagram illustrating an example of a user interface (interface) setting the allowable range of a candidate for a normal direction. A numerical value of an angle which is allowed by the user is input into an input box 701. The fact that a numerical value of 20 is input into the input box 701 means that when an angle formed between the normal direction of the object W in FIG. 4 and the representative normal vector N is within 20 degrees, the normal direction of the object W is allowed as a reference direction for converting the distance information.

As another decision method, there is a method of deciding an allowable angle written in a setting file stored in the information processing device 50 by reading the allowable angle. The allowable angle may be decided by measuring a distribution of the main surfaces of the actual objects W. The allowable angle may be decided by simulating physical disposition of the objects W using computer graphics.

In S302, the processor 52 estimates the normal direction of the first pixel 302 in the candidate range set in S301 before the evaluation value of the first pixel 302 is obtained. Specifically, the normal line of the first pixel 302, that is, the direction of a local plane including the first pixel 302, is estimated by fitting the plane using the distance information of the nearby pixels of the first pixel 302. Here, the nearby pixels used in fitting calculation of the plane may be the same set as the nearby pixels after S103. A different side or a different shape range from the nearby pixel range used in S103 may be used.

The method of estimating the normal direction in S302 is not limited to the foregoing method. For example, there is a method of obtaining a vector in which an angle formed with the representative normal vector N enters the candidate range set in S301 on a plane containing two vectors, the representative normal vector N and a vector estimated without considering the candidate range set in S301.

In addition, a method of generating a plurality of random vectors within the candidate range set in S301 and selecting a vector with the smallest total sum of absolute values of inner products of the first pixel 302 and vectors connecting the nearby pixels can also be used.

After the normal line corresponding to the first pixel is decided in S302, the processor 52 converts the distance information of the nearby pixels using the normal vector in S303. In S202 according to the second embodiment, the distance information is converted into the distance information in which the representative normal vector N is used as the reference. In the embodiment, however, the distance information is converted into the distance information in which the normal vector corresponding to the first pixel 302 is used as the reference.

As described above, in the embodiment, a slope angle of the object W with respect to the representative normal vector N is set within the predetermined range and the normal direction is decided for each processing target pixel. Therefore, even when all the plurality of objects W may not be approximated to one representative normal vector N, the contour can be detected with high precision.

### (Fourth Embodiment)

A fourth embodiment corresponds to a case in which all the plurality of objects W may not be approximated to one representative normal vector N. In the embodiment, a set (a plurality of candidates) of a normal direction taken by the object W is prepared, an evaluation value is calculated for each normal direction included in the set, and the normal direction for which the evaluation value is the minimum is selected as a conversion reference for the distance information.

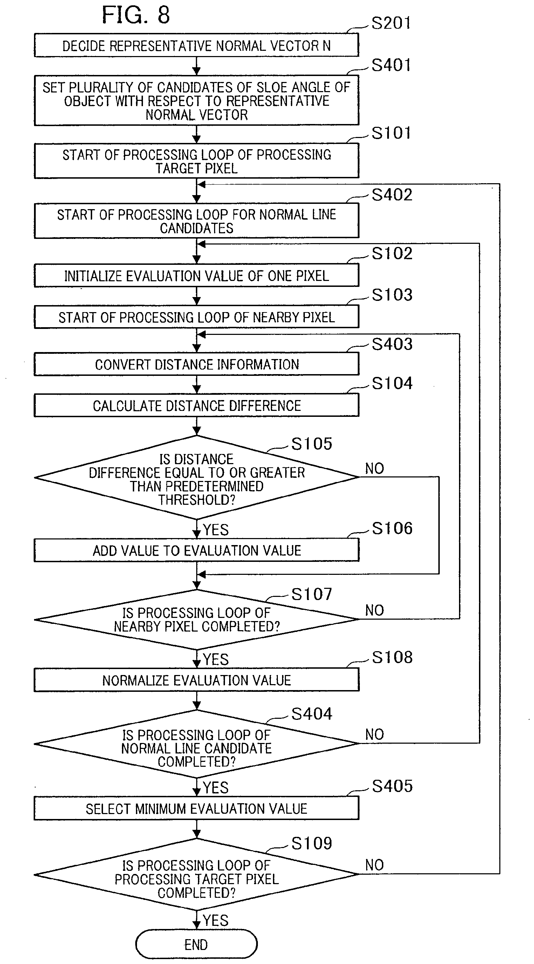

Fig. 8 is a flowchart illustrating a detection method according to the embodiment. The same reference numerals are given to common processes to those of the first or second embodiment and the description thereof will be omitted.

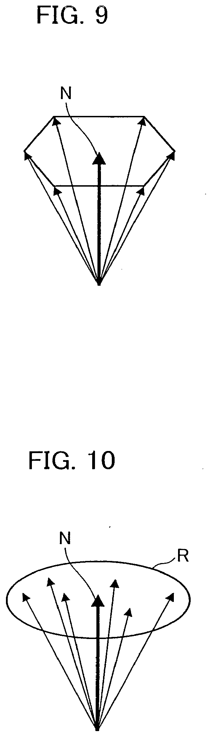

In S401 between S201 and S101 according to the embodiment, the processor 52 sets a plurality of candidates of a slope angle of the object W with respect to the representative normal vector N. Figs. 9 and 10 are diagrams illustrating setting examples of the candidates of slope angle. An example in which six candidates of the normal line are set at an equal interval centering on the representative normal vector N is illustrated in FIG. 9. An example in which six candidates of the normal line are set at random within a range R centering on the representative normal vector N is illustrated in FIG. 10.

In FIG. 9, an angle formed between each candidate of the normal line and the representative normal vector N may be designated in advance by a user using, for example, the user interface as in FIG. 7. The range R in FIG. 10 may also be designated in advance by a user using the user interface. The set of the normal directions taken by the object W also includes the representative normal vector N.

S402 is a starting point of the processing loop for the normal line candidates. S404 is a step of determining whether the processing loop of the normal line candidates is completed. When the candidates of the normal line are set as in FIG. 9, the number of times of the loop is repeated is a total of 7 of six candidates + the representative normal vector N.

In S403, the processor 52 converts the distance information of the pixel using the candidate of the normal line as a reference. In S405, the processor 52 selects the smallest value among the evaluation values obtained for the candidates of the normal line as the evaluation value used for contour detection of the object W. The evaluation value obtained for each candidate of the normal line can be stored in a memory of the information processing device 50 after S108 or S107. In S405, the processor 52 reads the evaluation values from the memory and selects the smallest value.

As described above, in the embodiment, the contour can be detected with high precision even when an attitude of the individual object W is subtly changed. For example, there can be the advantage of obtaining the evaluation value in which a systematic "wave" is cancelled even in distance information in which the systematic "wave" occurs in a flat portion of the surface of the object W.

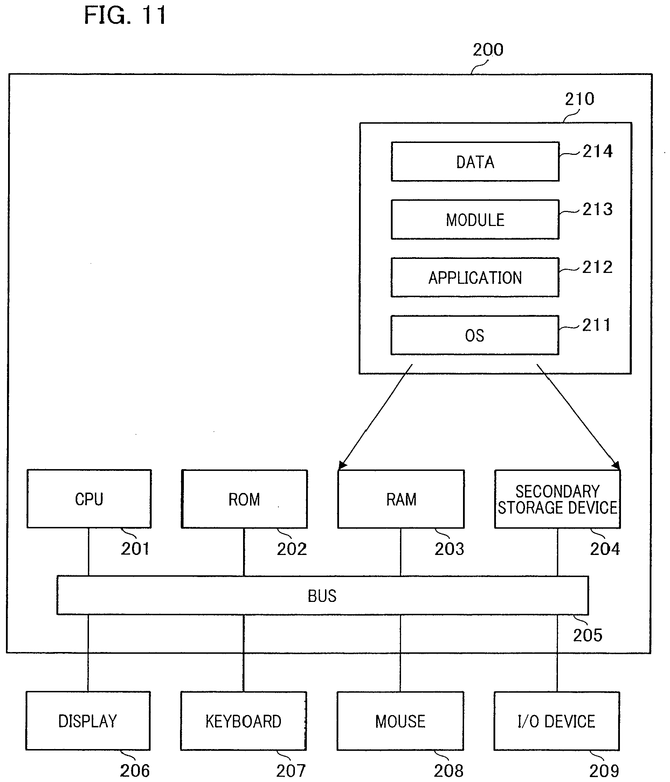

Fig. 11 is a block diagram illustrating a configuration of an information processing device 200 to which the embodiments can be applied. For example, a personal computer can be used as the information processing device 200. An embedded device or a distributed system via a network can be used as another information processing device.

The information processing device 200 includes a CPU 201, a ROM 202, a RAM 203, a secondary storage device 204, and a bus 205. The CPU 201 executes a program for the contour detection method or controls all the devices. As nonvolatile memory, the ROM 202 retains a program necessary at the time of initially operating the information processing device 200.

The RAM 203 and the secondary storage device 204 record a program 210 which is used by the CPU 201. The program 210 includes an OS 211, an application 212, a module 213, and data 214. The CPU 201, the ROM 202, the RAM 203, and the secondary storage device 204 included in the information processing device 200 exchange information via the bus 205. The information processing device 200 are connected to the display 206, the keyboard 207, the mouse 208, and the I/O device 209 via the bus 205.

The display 206 is used to display information such as a processing result or an on-going status of a process for a user. The keyboard 207 and the mouse 208 are used to input an instruction from the user. In particular, the mouse 208 is used to input a 2-dimensional or 3-dimensional positional relation. The I/O device 209 is used to take new data or registration data. The measurement device 1 can be used as the I/O device 209.

Instead of the control unit 40, the CPU 201 may control operations of the projection unit 20 and the imaging unit 30. The CPU 201 may also serve as the information processing device 50. The I/O device 209 can also output an information processing result to another information processing device. For example, an output destination can also be a device controlling a robot.

### (Embodiment of Article Manufacturing Method)

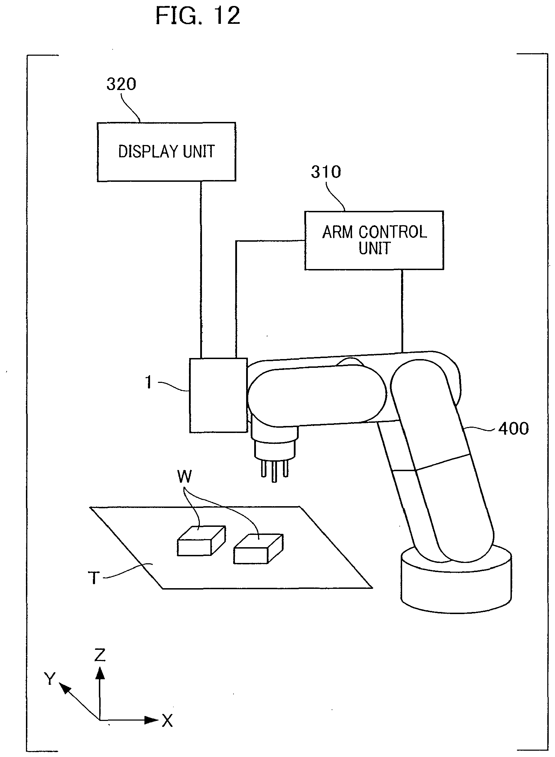

The above-described measurement device 1 can be used in a state in which the measurement device 1 is supported by a certain support member. In the embodiment, for example, a control system in which a robot arm 400 (a gripping device) can be furnished to be used as in FIG. 12 will be described. The measurement device 1 projects pattern light to the object W placed on a support table T to image the object W and acquire an image. Then, a control unit (not illustrated) of the measurement device 1 or an arm control unit 310 acquiring image data (distance image) output from the control unit (not illustrated) of the measurement device 1 obtains a position and an attitude of the object W and the arm control unit 310 acquires information regarding the obtained position and attitude. The arm control unit 310 transmits a driving instruction to the robot arm 400 and controls the robot arm 400 based on the information (recognition result) regarding the position and the attitude. The robot arm 400 retains the object W with a robot hand or the like (a gripping portion) at the front end of the robot arm 400 and performs movement such as translation or rotation. Further, by allowing the robot arm 400 to combine (assemble) the object W with another component, it is possible to manufacture an article including a plurality of components, for example, an electronic circuit substrate or a machine. By machining (processing) the moved object W, it is possible to manufacture an article. The arm control unit 310 includes an arithmetic device such as a CPU and a storage device such as a memory. The control unit controlling the robot may be installed out of the arm control unit 310. Measurement data measured by the measurement device 1 or an obtained image may be displayed on the display unit 320 such as a display.

The pixels in which the distance information is calculated can include pixels of distance information considerably deviated from other calculation results. In this case, after a process of excluding the pixels of the distance information is performed in advance, the flow for detecting the contour of the object W may be performed.

In the foregoing embodiments, the distance information is compared, but the foregoing embodiments can also be applied even when luminance information (pixel value) is compared based on a grayscale image. The projection pattern for obtaining the distance image is not limited to the stripe pattern. For example, a random dot pattern or laser slit light may also be used.

### (Other Embodiment)

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application No. 2017-032867 filed on February 24, 2017, which is hereby incorporated by reference herein in its entirety.

## Claims

1. An information processing device that is configured to perform a contour extraction of an object based on an image information which is obtained by imaging the object and in which each pixel has information regarding a distance from a reference position, the information processing device comprising:
a processor (52) configured to perform a contour extraction process on the image information and perform the contour extraction process on one pixel of the image information based on a difference equal to or greater than a threshold among differences between the distance corresponding to the one pixel and the distances corresponding to a plurality of peripheral pixels in periphery of the one pixel,
wherein the processor (52) is configured to perform the contour extraction process based on the number of peripheral pixels having the difference equal to or greater than the threshold among the plurality of peripheral pixels.

2. The information processing device according to claim 1, wherein the processor (52) is configured to use subtraction as the difference.

3. An information processing device that is configured to perform a contour extraction of an object based on an image information which is obtained by imaging the object and in which each pixel has information regarding a distance from a reference position, the information processing device comprising:
a processor (52) configured to perform a contour extraction process on the image information and perform the contour extraction process on one pixel of the image information based on a difference equal to or greater than a threshold among differences between the distance corresponding to the one pixel and the distances corresponding to a plurality of peripheral pixels in periphery of the one pixel,
wherein the processor (52) is configured to perform the contour extraction process based on a total sum of differences between the threshold and differences of the peripheral pixels having the differences equal to or greater than the threshold among the plurality of peripheral pixels.

4. The information processing device according to claim 3, wherein the processor (52) is configured to weight the differences.

5. The information processing device according to any one of claims 1 to 4, wherein the processor (52) is configured to convert the image information into a second image information in which each pixel has information regarding a distance from a reference position on a normal line of the object decided in advance and performs the contour extraction process on the second image information.

6. The information processing device according to claim 5, wherein the processor (52) is configured to estimate the normal line based on the image information.

7. The information processing device according to claim 5 or 6, wherein the processor (52) is configured to perform a process of supplying an interface for inputting information regarding an allowable range for a direction of the normal line and estimates the normal line based on the allowable range obtained via the interface.

8. The information processing device according to claim 5 or 6, wherein the processor (52) is configured to estimate the normal line based on a plurality of candidates for the normal line.

9. An information processing device comprising:
a processor (52) configured to perform a contour extraction process on an image,
wherein the processor (52) is configured to perform the contour extraction process on one pixel of the image based on a difference equal to or greater than a threshold among differences between a pixel value corresponding to the one pixel and pixel values corresponding to a plurality of peripheral pixels in periphery of the one pixel.

10. A system comprising:
the information processing device according to any one of claims 1 to 9; and
a robot configured to retain and move the object based on a recognition result of the object by the information processing device.

11. An information processing method of recognizing an object based on an image information which is obtained by imaging the object and in which each pixel has information regarding a distance from a reference position, the method comprising:
performing a contour extraction process on one pixel of the image information based on a difference equal to or greater than a threshold among differences between the distance corresponding to the one pixel and the distances corresponding to a plurality of peripheral pixels in periphery of the one pixel; and
recognizing the object based on a result of the contour extraction process on each of a plurality of pixels of the image information.

12. An information processing method of performing a contour extraction process on an image, the method comprising:
performing the contour extraction process on one pixel of the image based on a difference equal to or greater than a threshold among differences between a pixel value corresponding to the one pixel and pixel values corresponding to a plurality of peripheral pixels in periphery of the one pixel.

13. A method of manufacturing an article, the method comprising the steps of:
moving, by a robot, an object with contour extracted by the information processing device according to any one of claims 1 to 9; and
manufacturing the article by performing a process on the moved object.
